(19) **Europäisches Patentamt / European Patent Office / Office européen des brevets**

(11) **EP 2 272 220 B1**

(12) **FASCICULE DE BREVET EUROPEEN**

(45) Date de publication et mention de la délivrance du brevet:
**28.06.2017 Bulletin 2017/26**

(21) Numéro de dépôt: **09742248.9**

(22) Date de dépôt: **06.04.2009**

(51) Int Cl.:
*H04W 72/02* *(2009.01)*    *H04W 84/18* *(2009.01)*
*H04L 12/801* *(2013.01)*

(86) Numéro de dépôt international:
**PCT/FR2009/050583**

(87) Numéro de publication internationale:
**WO 2009/136050 (12.11.2009 Gazette 2009/46)**

(54) **GESTION DE SERVICE DANS UN RESEAU MULTICANAUX ET MULTI SAUTS**

DIENSTVERWALTUNG IN EINEM MULTIKANAL- UND MULTIHOP-NETZ

MANAGEMENT OF SERVICE IN A MULTICHANNEL AND MULTI-HOP NETWORK

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **17.04.2008 FR 0852617**

(43) Date de publication de la demande:
**12.01.2011 Bulletin 2011/02**

(73) Titulaire: **Orange**
**75015 Paris (FR)**

(72) Inventeurs:
• **TCHEPNDA, Christian**
  **F-92130 Issy Les Moulineaux (FR)**
• **MOUSTAFA, Hassnaa**
  **F-92100 Boulogne Billancourt (FR)**

(74) Mandataire: **Cabinet Plasseraud**
**66 rue de la Chaussée d'Antin**
**75440 Paris Cedex 09 (FR)**

(56) Documents cités:
**WO-A-2007/075042    US-A1- 2005 090 283**
**US-A1- 2007 225 044**

EP 2 272 220 B1

**Description**

La présente invention concerne le domaine des réseaux de transmission, et plus particulièrement les réseaux de transmission adaptés pour une transmission multi sauts. Un exemple se trouve dans US2007/225044. Nombreux sont les types de réseau permettant d'effectuer des transmissions multi sauts. On peut notamment citer à ce titre les réseaux véhiculaires dont l'architecture repose sur une norme DSRC 'Dedicated Short Range Communications'.

Ces réseaux véhiculaires permettent d'offrir différents services particulièrement adaptés aux conducteurs de véhicule et/ou à leurs passagers. Ces services peuvent par exemple être relatifs à la sécurité routière, et peuvent notamment consister à signaler des dangers sur les routes aux véhicules concernés. De tels services peuvent aussi être relatifs à des services de navigation sur le réseau Internet, comme par exemple proposer une offre de jeux en ligne, ou encore informer de différentes prestations disponibles aux alentours géographiques du véhicule, ou bien offrir une possibilité de paiement électronique pour l'essence, un parking, un péage autoroutier, ou de la restauration à emporter, ou encore même proposer un service de téléphonie sur IP ou de streaming vidéo.

Ces réseaux reposent, d'une part, sur une infrastructure fixe qui comprend des entités disposées au bord des routes, en tant que points d'accès, et des serveurs offrant différents services, ainsi que des passerelles reliant le réseau véhiculaire considéré à d'autres réseaux, comme le réseau IP pour offrir certains services et, d'autre part, sur des entités mobiles qui sont embarquées au niveau des véhicules eux-mêmes.

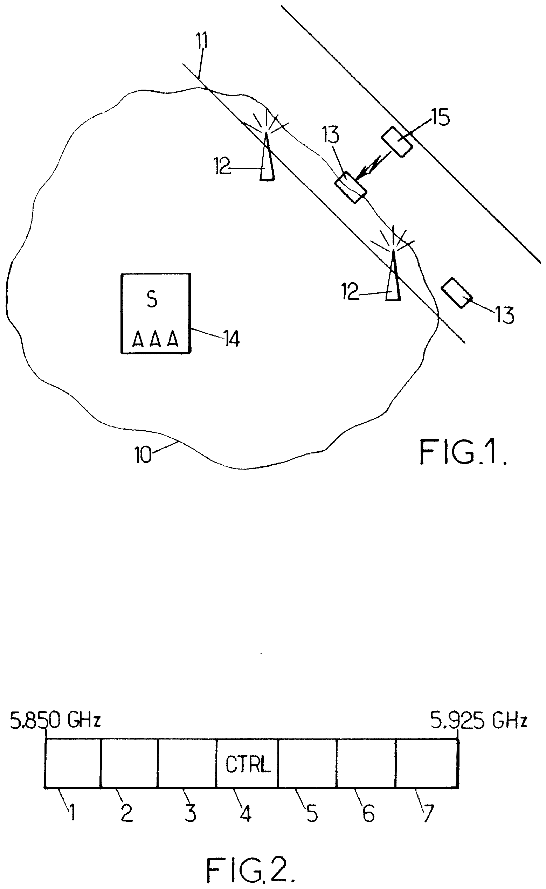

La figure 1 illustre un tel réseau véhiculaire dont l'architecture repose sur une infrastructure fixe 10 comprenant notamment des points d'accès 12 situés en bordure de route et des entités mobiles 13 situées au niveau des véhicules.

Selon la norme DSRC, les entités mobiles d'un tel réseau situées au niveau des véhicules sont référencées OBU (pour 'On Board Unit') et les entités fixes situées en bord de route et permettant aux entités mobiles d'accéder à la partie du réseau fixe, ou encore points d'accès, sont référencés RSU (pour 'Road-Side unit').

Classiquement, la partie du réseau fixe comprend au moins un serveur d'authentification, référencé AAA Serveur 14 (pour 'Authentication Authorization and Accounting'), qui peut concrètement correspondre à plusieurs entités réseaux, et qui est en charge d'authentifier une entité mobile qui souhaite accéder à des services du réseau considéré, avant de lui en autoriser l'accès.

Une fois qu'une entité mobile embarquée sur un véhicule a accédé à un réseau véhiculaire, cette entité mobile peut bénéficier des services offerts dans ce réseau, tels que ceux énoncés ci-dessus.

Afin de bénéficier de tels services, ce type de réseau étant adapté pour des transmissions multi sauts, une entité mobile au niveau d'un véhicule peut établir, d'une part, des communications avec une autre entité mobile au niveau d'un autre véhicule, communication IVC (pour 'Inter-Vehicle Communications') et, d'autre part, des communications avec une entité fixe de l'infrastructure de ce réseau, ou point d'accès, (RVC pour 'Road-to-Vehicle Communications'). Ainsi, un véhicule 15 qui n'est pas situé dans la couverture radio d'un point d'accès 12, peut malgré tout bénéficier des services offerts dans ce réseau via une communication multi sauts, si sa localisation permet à son entité mobile de communiquer avec l'entité mobile d'un autre véhicule qui, elle, est en mesure de communiquer avec un point d'accès 12 du réseau véhiculaire.

Ainsi, certaines entités mobiles OBU de véhicules servent à d'autres entités mobiles OBU de véhicules pour atteindre les points d'accès fixes 12 du réseau, via une communication multi sauts.

Les transmissions selon la norme DSRC sont effectuées dans la bande de fréquence depuis 5 850 GHz à 5 925 GHz. Cette bande passante est segmentée en sept canaux radio de 10 MHz chacun. Ces canaux se répartissent fonctionnellement en un canal de contrôle et six canaux de service, chacun pouvant offrir des débits allant de 6 à 27 Mbps. Un tel réseau permet des communications à haut débit entre les entités mobiles embarquées sur les véhicules et l'infrastructure fixe.

La figure 2 illustre la segmentation de la bande passante DSRC en sept canaux. Un canal de contrôle 4 est classiquement réservé à la transmission des messages de gestion du réseau. Il est également utilisé pour transmettre des messages de haute priorité comme peuvent l'être certains messages critiques liés à la sécurité routière. Les six autres canaux, canaux 1-3 et canaux 5-7, sont classiquement dédiés à la transmission d'informations relatives à différents services. L'association entre un service et un canal de service est annoncée sur le canal de contrôle.

Selon un protocole PANA (pour 'Protocol for carrying Authentification for Network Access') en cours de spécification à l'IETF (pour 'Internet Engineering Task Force'), on peut mettre en oeuvre un mécanisme d'authentification d'une entité mobile OBU auprès d'un serveur d'authentification AAA, permettant à une entité mobile qui, étant donné sa localisation, n'est pas en mesure de communiquer directement avec un point d'accès 12, de procéder tout de même à une phase d'authentification auprès de l'infrastructure fixe via une autre entité mobile.

Dans ce contexte, une entité mobile embarquée sur un véhicule qui n'a pas d'accès direct au serveur d'authentification dans l'infrastructure fixe peut toutefois se faire authentifier et obtenir une autorisation d'accès au réseau en établissant une communication via une autre entité mobile embarquée sur un autre véhicule qui, elle, peut communiquer avec le serveur d'authentification.

Toutefois, la communication entre l'entité mobile du véhicule souhaitant procéder à une phase d'authentification et le serveur d'authentification, ainsi établie via une autre entité mobile d'un autre véhicule, est effectuée sur un canal associé au service d'authentification qui peut parfois être dans un état d'engorgement tel qu'il ne peut être en mesure de transmettre certains paquets. Un problème d'engorgement peut être fatal, notamment dans une phase d'authentification.

Un objectif de la présente invention est d'améliorer la situation.

Un premier aspect de la présente invention propose un procédé de gestion d'au moins un service offert dans un réseau de transmission multi sauts adapté pour transmettre des paquets du service via une pluralité d'entités de transmission sur un ensemble de N canaux radio de transmission, N étant un entier supérieur ou égal à 2, ledit ensemble de N canaux étant associé au service ; ledit procédé comprenant les étapes suivantes au niveau d'une entité parmi ladite pluralité d'entités de transmission, pour transmettre un paquet :

/1/ obtenir des informations relatives à un niveau d'occupation courante et à un niveau d'occupation à venir pour chacun desdits N canaux respectifs ;
/2/ sélectionner un canal parmi lesdits canaux en fonction desdites informations ; et
/3/ transmettre le paquet sur le canal sélectionné.

Grâce à ces dispositions, lorsqu'une des entités du réseau est en charge de transmettre un paquet dans le réseau, elle est en mesure de sélectionner un canal de transmission radio dans un ensemble de canaux radio associé au service sur la base de son ou ses niveaux d'occupation. En procédant ainsi, il est aisé de mettre en place des niveaux de priorité dans la transmission de certains paquets dans le réseau, en fonction du service auxquels ils appartiennent. Ainsi, on peut avantageusement prévoir que les paquets relatifs à un service considéré comme prioritaire peuvent être transmis sur un canal qui présente globalement un taux d'occupation relativement faible.

On peut noter que, dans un mode de réalisation de la présente invention, chaque entité de transmission du réseau est adaptée pour transmettre un paquet sur un canal de transmission parmi les N canaux considérés.

On peut également prévoir de transmettre des paquets appartenant à un service qui est considéré comme non prioritaire en sélectionnant un canal de transmission radio parmi l'ensemble des canaux de transmission qui présente un niveau d'occupation relativement élevé afin de pouvoir maintenir au moins certains canaux radio de l'ensemble des canaux radio considéré avec un niveau d'occupation relativement faible.

La mise en oeuvre d'un tel procédé de gestion de service au moins au niveau d'une entité du réseau présente déjà un avantage. Toutefois, il est aisément possible de le mettre en oeuvre au niveau de tout ou partie des entités du réseau afin d'optimiser notamment la fiabilité et la robustesse de certains services offerts dans ce réseau.

On peut prévoir que le réseau comprenne, comme un réseau véhiculaire, une infrastructure fixe, avec des entités de transmission fixes, et des entités mobiles.

Dans ce cas, l'entité au niveau de laquelle les étapes /1/ à /3/ sont réalisées peut correspondre à :

- une entité mobile parmi une entité mobile requérant ledit service et une entité mobile utilisée comme entité mobile intermédiaire par une autre entité mobile requérant ledit service ; ou
- une entité de l'infrastructure fixe.

En mettant en oeuvre ces étapes au niveau d'une ou plusieurs de ces entités, on est aisément en mesure d'améliorer la fiabilité de certains services, en les gérant en tant que services prioritaires pour la transmission de paquets.

Ces étapes /1/ à /3/ peuvent être mises en oeuvre pour tout ou partie des paquets relatifs à un service donné. Afin d'obtenir le plus haut niveau de fiabilité pour un service donné, il convient de mettre en oeuvre ces étapes pour chaque paquet à transmettre.

Le niveau d'occupation courante d'un canal peut correspondre à l'un des états parmi un état occupé et un état libre ; et le niveau d'occupation à venir d'un canal peut indiquer une quantité d'informations en attente de transmission sur ledit canal.

Ainsi définis, ces niveaux d'occupation de canal permettent d'obtenir une vision globale de l'activité de transmission qui a lieu sur le canal considéré qui permet de procéder à une sélection de canal de transmission qui est pertinente.

Dans un mode de réalisation de la présente invention, si au moins un canal de l'ensemble de canaux présente un niveau d'occupation courante à l'état libre et un niveau d'occupation à venir indiquant qu'il n'y a aucune information en attente de transmission, ledit au moins un canal est sélectionné à l'étape /2/.

En procédant ainsi, on est en mesure de gérer un service de manière prioritaire de telle sorte qu'il soit fiable.

Si un sous ensemble de canaux de l'ensemble de canaux présente un niveau d'occupation courante à l'état libre et un niveau d'occupation à venir indiquant qu'il n'y a aucune information en attente de transmission, à l'étape /2/, un canal peut alors être sélectionné parmi ledit sous ensemble de canaux de manière aléatoire.

Ainsi, chacun des canaux du sous ensemble de canaux peut être sélectionné avec une même probabilité. Ceci permet une répartition de l'utilisation des canaux de transmission pertinente pour garantir un certain niveau de fiabilité pour le service offert.

A l'étape /2/, on peut également prévoir de sélectionner au moins un canal présentant le niveau d'occupation à venir minimum parmi l'ensemble de canaux.

Ce type de sélection peut avantageusement être mis en oeuvre dans le cas où aucun canal de transmission de l'ensemble de canaux ne présente à la fois un niveau d'occupation courante libre et un niveau d'occupation à venir avec aucune information à transmettre. Dans ce cas, on est tout de même en mesure de privilégier ainsi la transmission du paquet considéré.

Si un sous ensemble de canaux de l'ensemble de canaux présente le niveau d'occupation à venir minimum, à l'étape /2/, un canal est sélectionné parmi ledit sous ensemble de canaux de manière aléatoire.

Ainsi, chacun des canaux du sous ensemble de canaux peut être sélectionné de manière équiprobable, ce qui permet d'optimiser la répartition de la transmission de paquets du service considéré sur tous ces canaux du sous ensemble et ainsi fiabiliser l'offre de ce service.

On peut avantageusement prévoir qu'une entité de transmission du réseau considéré diffuse dans ce réseau de transmission une indication relative à l'ensemble de N canaux associés au service. Ainsi, sans avoir à la requérir, les entités du réseau apprennent l'ensemble des canaux de transmission qui sont associés au service considéré. On peut alternativement prévoir que cette indication relative à l'ensemble de N canaux associés au service soit reçue sur requête.

Le réseau de transmission multi sauts peut être un réseau de type véhiculaire et le service peut correspondre à une étape d'authentification d'entité mobile.

Un deuxième aspect de la présente invention propose une entité de transmission adaptée pour mettre en oeuvre le procédé de gestion de service selon le premier aspect de la présente invention.

Un troisième aspect de la présente invention propose un système de gestion d'au moins un service offert dans un réseau de transmission multi sauts comprenant au moins une entité de transmission selon le deuxième aspect de la présente invention.

Un quatrième aspect de la présente invention propose un programme d'ordinateur comportant des instructions pour la mise en oeuvre du procédé de gestion selon le premier aspect de la présente invention lorsque ce programme est exécuté par un processeur.

Un cinquième aspect de la présente invention propose un support d'enregistrement sur lequel est stocké le programme d'ordinateur selon le quatrième aspect de la présente invention.

D'autres aspects, buts et avantages de l'invention apparaîtront à la lecture de la description d'un de ses modes de réalisation.

L'invention sera également mieux comprise à l'aide des dessins, sur lesquels :

- la figure 1 illustre une architecture classique d'un réseau véhiculaire reposant sur des entités fixes dans une infrastructure fixe et des entités situés au niveau des véhicule ;
- la figure 2 illustre une segmentation de la bande passante en sept canaux selon la norme DSRC ;
- la figure 3 illustre les principales étapes d'un procédé de gestion de service dans un réseau selon un mode de réalisation de la présente invention ;
- la figure 4 illustre une pile protocolaire pour la mise en oeuvre d'un service selon un mode de réalisation de la présente invention ;
- la figure 5 illustre deux exemples de piles protocolaires selon un mode de réalisation de la présente invention ;
- la figure 6 illustre un mécanisme d'obtention d'informations relatives au niveau d'occupation de canal au sein d'une pile protocolaire selon un mode de réalisation de la présente invention ;
- la figure 7 illustre une étape de sélection de canal pour transmettre un paquet selon un mode de réalisation de la présente invention ; et
- la figure 8 illustre une architecture d'une entité de transmission selon un mode de réalisation de la présente invention.

La présente invention est par la suite décrite dans son application aux réseaux de type réseau véhiculaire comprenant une infrastructure fixe et des entités mobiles qui sont embarquées dans des véhicules mobiles. L'infrastructure fixe comprend des entités fixes qui sont respectivement adaptées pour permettre aux entités mobiles d'accéder à des services du réseau, ou encore points d'accès et des entités fixes qui correspondent à des serveurs en charge d'offrir un service comme notamment un serveur AAA en charge d'offrir un service d'authentification d'entité mobile avant d'autoriser l'accès à tout autre service offert dans ce réseau.

Toutefois, aucune limitation n'est attachée à ce type de réseau au regard de la présente invention. Ainsi, on peut avantageusement mettre en oeuvre un procédé selon un mode de réalisation de la présente invention quelque soit le type du réseau multi sauts offrant un ensemble de canaux radio de transmission de paquet.

Dans le contexte d'un réseau véhiculaire selon DSRC, quatre fonctions sont classiquement mises en oeuvre pour l'accès et l'exécution d'un service ou d'une application.

La première de ces fonctions correspond à une phase d'enregistrement au cours de laquelle les services ou applications offerts dans le réseau s'enregistrent auprès des entités mobiles et des points d'accès 12 de l'infrastructure fixe. On peut prévoir de définir un niveau de priorité pour l'application au cours de cette phase d'enregistrement. Ainsi les entités fixes et mobiles connaissent ce niveau de priorité pour chaque service offert.

La deuxième fonction correspond à une surveillance du canal de contrôle: les entités mobiles (ou OBUs) écoutent régulièrement le canal de contrôle à travers lequel elles reçoivent des annonces relatives aux applications ou services ou encore des messages critiques liés à la sécurité routière.

La troisième fonction correspond à une annonce d'applications ou de services au cours de laquelle les points d'accès fixes (ou RSUs) annoncent les services possibles sur le canal de contrôle de manière périodique ou encore à la demande. Cette phase d'annonce repose sur une table de service ou une PST (pour 'Provider Service Table'). Dans un mode de réalisation de la présente invention, cette PST indique, pour une application donnée, un ensemble de canaux sur lequel l'application peut être mise en oeuvre ainsi que des paramètres liés à cette application.

Une quatrième fonction correspond à une phase d'initialisation et d'exécution des applications ou services au cours de laquelle les applications sont initialisées puis mises en oeuvre sur la base des informations indiquées dans la PST.

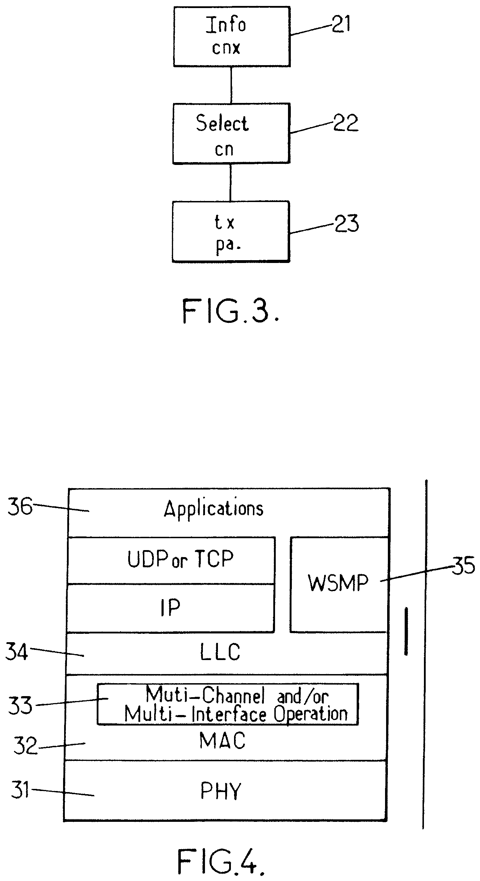

La figure 3 illustre les principales étapes d'un procédé de gestion de service dans un mode de réalisation de la présente invention.

Il convient de noter qu'un tel procédé selon un mode de réalisation de la présente invention peut avantageusement être mis en oeuvre au niveau de n'importe quelle entité du réseau considéré, que ce soit une entité mobile ou encore une entité fixe de l'infrastructure fixe.

Au niveau d'une entité quelconque du réseau, dès qu'il est requis que cette dernière transmette un paquet dans le réseau à une autre entité, les étapes suivantes peuvent être mises en oeuvre.

Ainsi, à une étape 21, l'entité du réseau considérée obtient des informations relatives à un niveau d'occupation courante d'un ensemble de canaux radio associés au service et/ou un niveau d'occupation à venir de ces canaux radio.

Puis, à une étape 22, sur la base des niveaux d'occupation respectifs de ces canaux radio dans le réseau, on sélectionne un de ces canaux. En procédant ainsi, on est avantageusement en mesure de favoriser la mise en oeuvre de certains services par rapport à d'autres. En effet, on peut aisément envisager de sélectionner un canal à faible niveau d'occupation courante et/ou à venir pour la transmission d'un paquet appartenant à certains services et de sélectionner un canal qui peut avoir un niveau d'occupation courante et/ou à venir relativement élevé pour transmettre un paquet appartenant à certains autres services.

Ainsi, il convient de noter que la prise en compte d'un de ces niveaux d'occupation de canal au moment de la transmission d'un paquet peut avantageusement permettre de gérer des priorités dans l'offre de différents services.

On peut ainsi prévoir qu'un service est plus prioritaire qu'un autre. On peut également prévoir que certains utilisateurs d'entité mobile sont plus prioritaires que d'autres, le niveau de priorité entre différents utilisateurs d'entités mobiles pouvant être notamment basé sur la localisation des entités mobiles concernées.

Puis, une fois que le canal de transmission est sélectionné, à une étape 23, l'entité de réseau concernée transmet alors le paquet en attente de transmission aux couches protocolaires en charge de la transmission pour une transmission du paquet sur ce canal sélectionné.

Cette transmission peut être effectuée immédiatement si le canal sélectionné présente un niveau d'occupation courante à libre et un niveau d'occupation à venir égal à zéro.

La figure 4 illustre une pile de couches protocolaires selon un mode de réalisation de la présente invention adaptée pour être mise en oeuvre sur des entités d'un réseau défini selon la norme DSRC.

Cette pile de couches protocolaires comprend une couche physique 'PHY' 31. Puis, se trouve une couche de contrôle d'accès au médium 'MAC' 32 (pour 'Médium Access Control') au dessus de laquelle est positionnée une couche de contrôle de lien logique 'LLC' (ou 'Logical Link Control') 34.

Au-dessus se trouve encore une couche protocolaire 35 pouvant correspondre soit à une couche WSMP (pour 'Wave Short Message Protocol'), soit à une couche TCP/IP (pour 'Transmission Control Protocol/Internet Protocol'), soit encore UDP/IP (pour 'User Datagram Protocol/Internet Protocol').

Cette couche protocolaire 35 est surmontée d'une couche de protocole de transport de l'application 36.

Dans un mode de réalisation de la présente invention, une couche protocolaire de gestion multi canaux 33 (ou 'Multi-Channel and/or Multi-Interface Opération') est introduite au sein de la couche protocolaire MAC 32.

Une telle couche protocolaire 33 introduite dans cette pile de protocoles permet avantageusement de déterminer l'état des canaux radio (ou en anglais 'Channel Sensing'), alors que la couche protocolaire de transport de l'application 36 est en charge de mettre en oeuvre les étapes principales du procédé de gestion selon un mode de réalisation de la présente invention.

Au sein d'un message protocolaire de la couche de transport de l'application 36, un champ indique le numéro de canal de transmission à utiliser par les protocoles en charge de la transmission.

Dans un mode de réalisation de la présente invention, le service géré selon le protocole de gestion correspond au service d'authentification et d'autorisation d'accès au réseau pour une entité mobile.

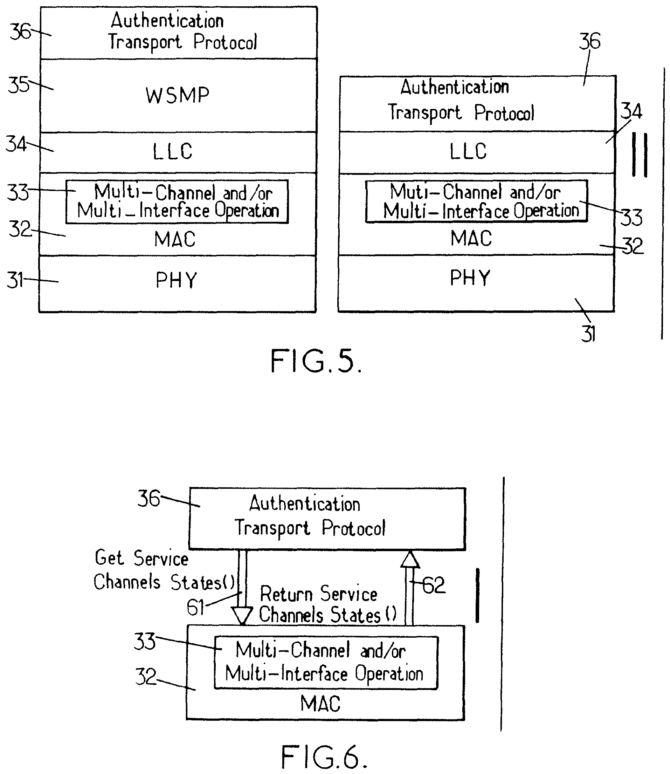

La figure 5 illustre deux exemples de piles protocolaires adaptées pour une telle mise en oeuvre. Ces deux piles protocolaires illustrées ici sont similaires à celle illustrée et décrite dans les sections précédentes, dans laquelle la couche de transport de l'application 36 correspond à une couche de transport de l'application d'authentification ('Authentication transport Protocol').

Dans ce contexte, la couche de transport du protocole d'authentification est en charge de choisir parmi des canaux radio que l'on souhaite exploiter, le canal radio sur lequel le paquet d'authentification sera transmis. A cet effet, une requête sur l'état des canaux de service considérés est transmise à la couche MAC qui en retour renvoie les différents états des canaux.

Comme illustrée sur la figure 6, pour obtenir les informations relatives aux différents canaux radio de transmission, on peut prévoir de les requérir par l'utilisation des fonctions suivantes qui permettent une interaction entre la couche de transport de l'application 36 et la couche de gestion multi canaux 33 :

GetServiceChannelsStates(i) 61, et
ReturnServiceChannelsStates(i) 62,
où i est un indice identifiant le canal parmi l'ensemble de canaux considérés.

Les informations relatives à un canal transmises par la fonction ReturnServiceChannelsStates() indiquent l'état d'un canal, c'est-à-dire un niveau d'occupation courante du canal et un niveau d'occupation à venir du canal.

Le niveau d'occupation courante du canal d'indice i peut être libre ou occupé et indiqué par une variable 'Busy$_i$' qui est à la valeur 1 pour indiquer un canal occupé et à la valeur 0 pour indiquer un canal libre.

Le niveau d'occupation à venir du canal peut indiquer une taille de file d'attente des paquets en attente de transmission sur le canal considéré. Cette taille peut être indiquée, dans une variable 'Length$_i$' exprimée en bits pour tous les services utilisant ce canal d'indice i.

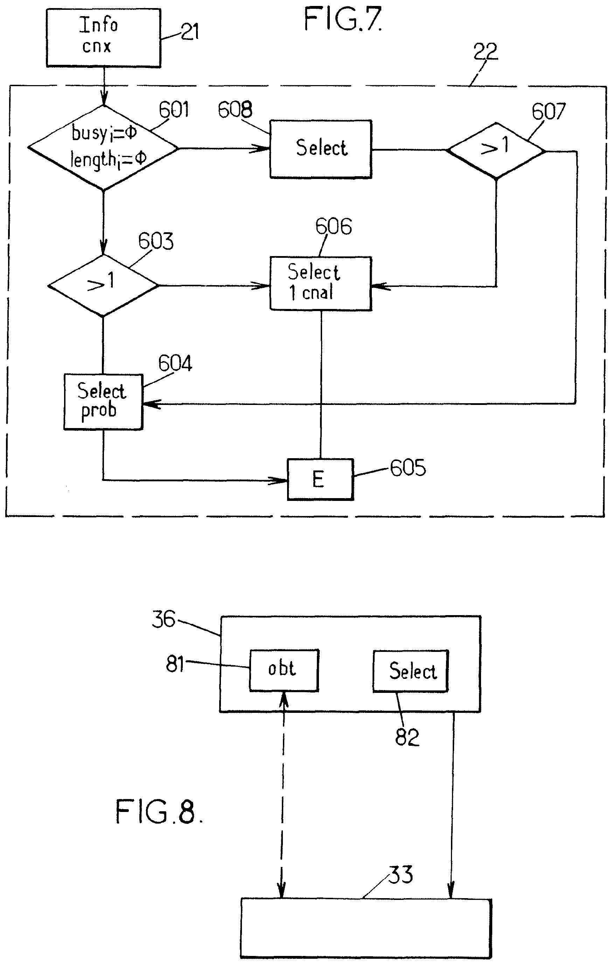

Dans un mode de réalisation préféré de la présente invention, toutes les entités du réseau considéré, qu'elles appartiennent à l'infrastructure fixe ou qu'elles soient des entités mobiles, dès lors qu'elles sont amenées à transmettre un paquet d'authentification, mettent en oeuvre les étapes principales d'un tel procédé de gestion. Plus précisément, l'étape de sélection 22 de canal peut avantageusement être mise en oeuvre tel que cela est décrit ci-dessous et tel qu'illustré à la figure 7, au niveau de la couche transport du protocole d'authentification 36.

Après l'étape 21, la couche 36 de transport pour le service considéré connait les états d'occupation courante et à venir des canaux radio que l'on peut potentiellement utiliser pour ce service.

Ensuite, l'étape de sélection de canal radio 22 est mise en oeuvre. Cette étape comprend en premier lieu une étape de test 601 visant à détecter s'il y a au moins un canal radio vérifiant les deux critères de sélection suivants, un canal présentant à la fois un niveau d'occupation courante libre et un niveau d'occupation à venir indiquant qu'aucun paquet n'est en attente de transmission. Si tel est le cas, on teste à l'étape 603 s'il y a plusieurs canaux radio qui vérifient ces deux critères. Dans le cas où il n'y en a qu'un seul, ce canal est sélectionné et son numéro est alors inscrit dans un champ correspondant du protocole de transport d'authentification à une étape 606.

S'il y a plusieurs canaux vérifiant ces deux critères de niveau d'occupation de canal, alors on peut sélectionner, à une étape 604, un de ces canaux aléatoirement, de manière à ce que chaque canal vérifiant ces deux critères puisse être choisi avec une probabilité équivalente p, p vérifiant donc :

$$p = 1/n$$

où n est le nombre de canaux vérifiant ces deux critères de niveau d'occupation de canal.

Dans ce cas également, on inscrit dans un champ correspondant du protocole de transport d'authentification le numéro du canal sélectionné.

Ce canal est avantageusement sélectionné, permettant ainsi une transmission du paquet d'authentification rapide et efficace.

En revanche, si aucun canal radio ne remplit ces deux critères de niveau d'occupation de canal, on peut avantageusement prévoir de sélectionner alors, à une étape 608, les canaux radio présentant le niveau d'occupation de canal à venir le plus faible, c'est-à-dire par exemple les canaux radio pour lesquels le nombre de bits en attente de transmission est le plus faible.

A une étape de test 607, si un seul canal radio présente un niveau d'occupation de canal minimum, alors ce canal est sélectionné et on inscrit son numéro dans un champ correspondant du protocole de transport d'authentification à l'étape 606.

Si un sous ensemble de canaux présente un même niveau d'occupation minimum, alors on effectue l'étape 604, au cours de laquelle un canal radio parmi tous ces canaux qui présentent le même niveau d'occupation de canal minimum est sélectionné aléatoirement de manière à ce que chaque canal puisse être sélectionné avec une même probabilité p vérifiant donc l'équation :

$$p = 1/n$$

La sélection du canal de transmission pour le paquet à transmettre correspond à la fin de l'étape de sélection 22, étape E (pour 'End') 605, selon un mode de réalisation de la présente invention.

Une telle étape 22 permet de sélectionner en priorité parmi un ensemble de canaux, un canal sur lequel il n'y a aucune activité et dont la file des paquets en attente de transmission est vide. Lorsqu'un tel canal n'est pas disponible, un canal, dont la file des paquets en attente de transmission est la plus petite, est alors sélectionné.

Il convient de noter qu'à l'étape 604, on sélectionne un canal parmi plusieurs canaux répondant à un ou plusieurs critères de sélection, de telle sorte que chacun de ces canaux puisse être sélectionné avec la même probabilité. A cet effet, on peut utiliser des méthodes bien connues de l'homme du métier qui sont basées sur des générateurs de nombres pseudo-aléatoires.

On peut par exemple prévoir de segmenter la plage des réels bornée par 0 et 1, en sous-plages de taille égale, le nombre de sous-plages correspondant au nombre de canaux éligibles. Les sous-plages sont attribuées respectivement aux différents canaux répondant aux critères de sélection. Puis, on génère alors un nombre pseudo-aléatoire compris entre 0 et 1 en mettant en oeuvre le générateur de nombres pseudo-aléatoires. Le numéro du canal finalement sélectionné correspond alors à la sous-plage à laquelle appartient le nombre généré.

La figure 8 illustre une architecture d'une entité fixe ou mobile selon un mode de réalisation de la présente invention.

Une telle entité comprend donc une pile protocolaire incluant :

- une première couche protocolaire inférieure 33 de contrôle d'accès pour un ensemble de canaux adaptée pour déterminer des niveaux d'occupation courante et à venir respectivement pour les canaux dudit ensemble ; et

- une seconde couche protocolaire supérieure 36 de gestion de transport dudit service comprenant :

  - une unité d'obtention 81 adaptée pour obtenir des informations relatives à un niveau d'occupation courante et à un niveau d'occupation à venir desdits canaux respectifs au niveau de la première couche ; et
  - une unité de sélection 82 adaptée pour sélectionner un canal parmi lesdits canaux en fonction desdites informations, un canal sélectionné étant utilisé pour la transmission d'un paquet du service.

Grâce aux dispositions de la présente invention, l'offre de service ainsi gérée peut avantageusement être robuste et fiable, puisque la transmission des paquets correspondants est effectuée sur un canal sélectionné en fonction de son niveau d'occupation.

Lorsque le service visé est le service d'authentification, la mise en oeuvre d'un procédé tel que décrit ci-dessus permet d'améliorer le taux de succès d'authentification, notamment en présence de transmission de paquets relatifs à des trafics tiers autres que ceux relatifs à l'authentification.

La mise en oeuvre d'un mode de réalisation de la présente invention est particulièrement adaptée à la forte mobilité des entités mobiles dans des réseaux véhiculaires puisqu'elle permet de réduire les délais de transmission de paquets qui sont induits par une contention importante sur certains canaux radio du réseau à certains moments.

On peut avantageusement prévoir de mettre en oeuvre un mode de réalisation de la présente invention sur des systèmes embarquant une seule interface radio, ou sur des systèmes embarquant plusieurs interfaces et sur des systèmes permettant de coupler à la gestion de service décrite ici des techniques d'allocation et de synchronisation des canaux.

Cette solution est transposable sur d'autres technologies de réseau sans fil supportant plusieurs canaux de transmission.

Il convient de noter que, dans un réseau tel que celui illustré à la figure 1, un mode de réalisation de la présente invention peut avantageusement être mis en oeuvre au niveau de chacune des entités sollicitées pour la transmission de paquets relatifs au service considéré.

On peut également prévoir de définir différents niveaux de priorité en fonction du service visé. Ainsi, on peut par exemple envisager de mettre en oeuvre une étape de sélection 22 telle que celle décrite ci-dessus en référence à la figure 6 pour un service important tel que l'authentification d'une entité mobile.

Puis, on peut prévoir de mettre une variante de cette étape de sélection 22 pour un service pour lequel on souhaite un niveau de robustesse et de fiabilité un peu moins élevé que pour le service d'authentification. Cette variante peut par exemple ne pas sélectionner les canaux présentant à la fois un niveau d'occupation courante à libre et un niveau d'occupation à venir indiquant qu'aucun paquet n'est en attente de transmission tel que cela est effectué dans les étapes 603 et 604 ou 606, mais de ne mettre en oeuvre seulement que les étapes 608 et suivantes, c'est-à-dire les étapes permettant de sélectionner un canal qui présente un niveau d'occupation de canal à venir minimum.

Dans le contexte d'un réseau de type DSRC, de préférence, l'ensemble de canaux éligibles ne comprend pas le canal de contrôle.

Les caractéristiques de la présente invention offrent une grande flexibilité de configuration de niveau de priorité des différents services offerts.

Une mise en oeuvre aisée d'un tel procédé de gestion de service peut reposer sur la pile protocolaire telle que décrite ci-avant en référence à la figure 3, et plus précisément, sur une interaction entre la couche transport du protocole de service visé et une couche MAC DSRC, qui peut éventuellement supporter des interfaces multiples.

Au delà de la technologie DSRC et du domaine des réseaux véhiculaires, un mode de réalisation de la présente invention peut avantageusement être appliqué dans des réseaux basés sur d'autres technologies supportant plusieurs canaux et mettant en oeuvre un service multi-sauts.

## Revendications

1. Procédé de gestion d'au moins un service offert dans un réseau de transmission multi sauts (10) adapté pour transmettre des paquets du service via une pluralité d'entités de transmission (12, 13) sur un ensemble de N canaux radio de transmission, N étant un entier supérieur ou égal à 2, ledit ensemble de N canaux étant associé au service ;

   ledit procédé comprenant les étapes suivantes au niveau d'une entité parmi ladite pluralité d'entités de transmission, pour transmettre un paquet :

/1/ obtenir (21) des informations relatives à un niveau d'occupation courante et à un niveau d'occupation à venir pour chacun desdits N canaux respectifs, dans lequel le niveau d'occupation à venir d'un canal indique une quantité d'information en attente de transmission sur ledit canal, ou dans lequel le niveau d'occupation à venir d'un canal indique si aucun paquet n'est en attente de transmission ;
/2/ sélectionner (22) un canal parmi lesdits canaux en fonction desdites informations ; et
/3/ transmettre (23) le paquet sur le canal sélectionné.

2. Procédé de gestion de service selon la revendication 1, dans lequel, pour chaque paquet à transmettre, l'entité met en oeuvre les étapes /1/ à /3/.

3. Procédé de gestion de service selon la revendication 1, dans lequel le niveau d'occupation courante d'un canal correspond à l'un des états parmi un état occupé et un état libre.

4. Procédé de gestion de service selon la revendication 3, dans lequel, si au moins un canal de l'ensemble de canaux présente un niveau d'occupation courante à l'état libre et un niveau d'occupation à venir indiquant qu'il n'y a aucun paquet en attente de transmission, ledit au moins un canal est sélectionné à l'étape /2/.

5. Procédé de gestion de service selon la revendication 4, dans lequel, si un sous ensemble de canaux de l'ensemble de canaux présente un niveau d'occupation courante à l'état libre et un niveau d'occupation à venir indiquant qu'il n'y a pas d'information en attente de transmission, à l'étape /2/, un canal est sélectionné parmi ledit sous ensemble de canaux de manière aléatoire.

6. Procédé de gestion de service selon la revendication 5, dans lequel, à l'étape /2/, on sélectionne au moins un canal présentant le niveau d'occupation à venir minimum parmi l'ensemble des canaux.

7. Procédé de gestion de service selon la revendication 6, dans lequel, si un sous ensemble de canaux de l'ensemble de canaux présente le niveau d'occupation à venir minimum, à l'étape /2/, un canal est sélectionné parmi ledit sous ensemble de canaux de manière aléatoire.

8. Procédé de gestion de service selon la revendication 1, dans lequel le réseau de transmission multi sauts est un réseau de type véhiculaire comprenant une infrastructure fixe (10) et au moins une entité mobile (13) ; et dans lequel le service est une étape d'authentification d'entité mobile.

9. Procédé de gestion de service selon la revendication 1, dans lequel une entité de transmission diffuse dans le réseau de transmission une indication relative à l'ensemble de N canaux associé au service.

10. Entité de transmission (12) dans un réseau de transmission multi sauts offrant au moins un service, ledit réseau comprenant au moins une autre entité de transmission (13) et étant adapté pour transmettre des paquets du service sur un ensemble de N canaux radio de transmission, N étant un entier supérieur ou égal à 2 ;
ladite entité de transmission comprenant une pile protocolaire incluant :

- une première couche protocolaire inférieure (33) de contrôle d'accès pour un ensemble de canaux adaptée pour déterminer des niveaux d'occupation courante et à venir respectivement pour les canaux dudit ensemble, dans laquelle le niveau d'occupation à venir d'un canal indique une quantité d'information en attente de transmission sur ledit canal, ou dans laquelle le niveau d'occupation à venir d'un canal indique si aucun paquet n'est en attente de transmission ; et
- une seconde couche protocolaire supérieure (36) de gestion de transport dudit service comprenant :

- une unité d'obtention (81) adaptée pour obtenir des informations relatives à un niveau d'occupation courante et un niveau d'occupation à venir desdits canaux respectifs au niveau de la première couche ; et
- une unité de sélection (82) adaptée pour sélectionner un canal parmi lesdits canaux en fonction desdites informations ; ledit canal sélectionné étant utilisé pour la transmission d'un paquet du service.

11. Système de gestion d'au moins un service offert dans un réseau de transmission multi sauts comprenant au moins une entité de transmission selon la revendication 10.

12. Programme d'ordinateur comportant des instructions pour la mise en oeuvre du procédé de gestion selon la revendication 1 lorsque ce programme est exécuté par un processeur.

13. Support d'enregistrement sur lequel est stocké le programme d'ordinateur selon la revendication 12.

**Patentansprüche**

1. Verfahren zur Verwaltung wenigstens eines Dienstes, der in einem Multi-Hop-Übertragungsnetz (10) angeboten wird, das dafür ausgelegt ist, Pakete des Dienstes über mehrere Übertragungsentitäten (12, 13) auf einer Menge von N Funkübertragungskanälen zu übertragen, wobei N eine ganze Zahl ist, die größer oder gleich 2 ist,
wobei die Menge von N Kanälen dem Dienst zugeordnet ist;
wobei das Verfahren die folgenden Schritte auf der Ebene einer Entität unter den mehreren Übertragungsentitäten umfasst, um ein Paket zu übertragen:

/1/ Gewinnen (21) von Informationen, die einen aktuellen Belegungsgrad und einen zukünftigen Belegungsgrad für jeden der N jeweiligen Kanäle betreffen, wobei der zukünftige Belegungsgrad eines Kanals eine Menge von Informationen angibt, die auf eine Übertragung auf dem Kanal warten, oder wobei der zukünftige Belegungsgrad eines Kanals angibt, ob sich kein Paket in Erwartung einer Übertragung befindet;
/2/ Auswählen (22) eines Kanals unter den Kanälen in Abhängigkeit von den Informationen; und
/3/ Übertragen (23) des Pakets auf dem ausgewählten Kanal.

2. Verfahren zur Dienstverwaltung nach Anspruch 1, wobei die Entität für jedes zu übertragende Paket die Schritte /1/ bis /3/ durchführt.

3. Verfahren zur Dienstverwaltung nach Anspruch 1, wobei der aktuelle Belegungsgrad eines Kanals einem der Zustände aus einem belegten Zustand und einem freien Zustand entspricht.

4. Verfahren zur Dienstverwaltung nach Anspruch 3, wobei, falls wenigstens ein Kanal der Menge von Kanälen einen aktuellen Belegungsgrad im freien Zustand und einen zukünftigen Belegungsgrad, der angibt, das sich kein Paket in Erwartung einer Übertragung befindet, aufweist, der wenigstens ein Kanal im Schritt /2/ ausgewählt wird.

5. Verfahren zur Dienstverwaltung nach Anspruch 4, wobei, falls eine Untermenge von Kanälen der Menge von Kanälen einen aktuellen Belegungsgrad im freien Zustand und einen zukünftigen Belegungsgrad, der angibt, das sich keine Informationen in Erwartung einer Übertragung befinden, aufweist, im Schritt /2/ ein Kanal aus der Untermenge von Kanälen zufällig ausgewählt wird.

6. Verfahren zur Dienstverwaltung nach Anspruch 5, wobei im Schritt /2/ wenigstens ein Kanal ausgewählt wird, der in der Menge von Kanälen einen minimalen zukünftigen Belegungsgrad aufweist.

7. Verfahren zur Dienstverwaltung nach Anspruch 6, wobei, falls eine Untermenge von Kanälen der Menge von Kanälen einen minimalen zukünftigen Belegungsgrad aufweist, in Schritt /2/ ein Kanal aus der Untermenge von Kanälen zufällig ausgewählt wird.

8. Verfahren zur Dienstverwaltung nach Anspruch 1, wobei das Multi-Hop-Übertragungsnetz ein Netz vom Typ eines Fahrzeugnetzes ist, das eine feste Infrastruktur (10) und wenigstens eine mobile Entität (13) umfasst; und wobei der Dienst ein Schritt der Authentifizierung der mobilen Entität ist.

9. Verfahren zur Dienstverwaltung nach Anspruch 1, wobei eine Übertragungsentität in dem Übertragungsnetz eine Angabe rundsendet, welche die Menge von N Kanälen betrifft, die dem Dienst zugeordnet ist.

10. Übertragungsentität (12) in einem Multi-Hop-Übertragungsnetz, das wenigstens einen Dienst anbietet, wobei das Netz wenigstens eine weitere Übertragungsentität (13) umfasst und dafür ausgelegt ist, Pakete des Dienstes auf einer Menge von N Funkübertragungskanälen zu übertragen, wobei N eine ganze Zahl ist, die größer oder gleich 2 ist;
wobei die Übertragungsentität einen Protokollstapel umfasst, welcher beinhaltet:

- eine untere erste Protokollschicht (33) zur Zugriffssteuerung für eine Menge von Kanälen, die dafür ausgelegt ist, für die Kanäle der Menge jeweils einen aktuellen und einen zukünftigen Belegungsgrad zu bestimmen, wobei der zukünftige Belegungsgrad eines Kanals eine Menge von Informationen angibt, die auf eine Übertragung auf dem Kanal warten, oder wobei der zukünftige Belegungsgrad eines Kanals angibt, ob sich kein Paket in Erwartung einer Übertragung befindet; und
- eine obere zweite Protokollschicht (36) zur Transportverwaltung des Dienstes, welche umfasst:

- eine Gewinnungseinheit (81), die dafür ausgelegt ist, Informationen zu gewinnen, die einen aktuellen Belegungsgrad und einen zukünftigen Belegungsgrad der jeweiligen Kanäle auf der Ebene der ersten Schicht betreffen; und
- eine Auswahleinheit (82), die dafür ausgelegt ist, in Abhängigkeit von den Informationen einen Kanal unter den Kanälen auszuwählen; wobei der ausgewählte Kanal für die Übertragung eines Pakets des Dienstes verwendet wird.

**11.** System zur Verwaltung wenigstens eines Dienstes, der in einem Multi-Hop-Übertragungsnetz angeboten wird, welches wenigstens eine Übertragungsentität nach Anspruch 10 umfasst.

**12.** Computerprogramm, welches Anweisungen zur Ausführung des Verfahrens zur Verwaltung nach Anspruch 1, wenn dieses Programm von einem Prozessor ausgeführt wird, umfasst.

**13.** Aufzeichnungsmedium, auf dem das Computerprogramm nach Anspruch 12 gespeichert ist.

**Claims**

**1.** Method for managing at least one service provided on a multi-hop transmission network (10) designed to transmit packets of the service via a plurality of transmission entities (12, 13) over a set of N radio transmission channels, N being an integer greater than or equal to 2, said set of N channels being associated with the service;
said method comprising the following steps at the level of one entity from said plurality of transmission entities, for transmitting a packet:

/1/ procuring (21) information relating to a level of current utilization and to a level of upcoming utilization for each of said N respective channels, wherein the level of upcoming utilization of a channel indicates a quantity of information awaiting transmission over said channel, or wherein the level of upcoming utilization of a channel indicates if no packet is awaiting transmission;
/2/ selecting (22) one channel from said channels depending on said information; and
/3/ transmitting (23) the packet over the selected channel.

**2.** Service management method according to Claim 1, wherein, for each packet to be transmitted, the entity implements steps /1/ to /3/.

**3.** Service management method according to Claim 1, wherein the level of current utilization of a channel corresponds to one of the states amongst an occupied state and a free state.

**4.** Service management method according to Claim 3, wherein, if at least one channel of the set of channels has a level of current utilization in the free state and a level of upcoming utilization indicating that there is no packet awaiting transmission, said at least one channel is selected in step /2/.

**5.** Service management method according to Claim 4, wherein, if a subset of channels of the set of channels has a level of current utilization in the free state and a level of upcoming utilization indicating that there is no information awaiting transmission, in step /2/, a channel is selected randomly from said subset of channels.

**6.** Service management method according to Claim 5, wherein, in step /2/, at least one channel having the minimum level of upcoming utilization is selected from the set of channels.

**7.** Service management method according to Claim 6, wherein, if a subset of channels of the set of channels has the minimum level of upcoming utilization, in step /2/, a channel is selected randomly from said subset of channels.

**8.** Service management method according to Claim 1, wherein the multi-hop transmission network is a vehicular network comprising a fixed infrastructure (10) and at least one mobile entity (13); and
wherein the service is a mobile entity authentication step.

**9.** Service management method according to Claim 1, wherein a transmission entity broadcasts, on the transmission network, an indication relating to the set of N channels associated with the service.

**10.** Transmission entity (12) on a multi-hop transmission network providing at least one service,
said network comprising at least one other transmission entity (13) and being designed to transmit packets of the service over a set of N radio transmission channels, N being an integer greater than or equal to 2;
said transmission entity comprising a protocol stack including:

- a first lower protocol layer (33) for controlling access to a set of channels, said layer being designed to determine levels of current and upcoming utilization, respectively, for the channels of said set, wherein the level of upcoming utilization of a channel indicates a quantity of information awaiting transmission over said channel, or wherein the level of upcoming utilization of a channel indicates if no packet is awaiting transmission; and
- an upper second protocol layer (36) for managing transport of said service, comprising:

- a procurement unit (81) designed to procure information relating to a level of current utilization and a level of upcoming utilization of said respective channels at the level of the first layer; and
- a selection unit (82) designed to select one channel from said channels depending on said information; said selected channel being used for the transmission of a packet of the service.

11. System for managing at least one service provided on a multi-hop transmission network comprising at least one transmission entity according to Claim 10.

12. Computer program including instructions for implementing the management method according to Claim 1 when this program is executed by a processor.

13. Storage medium on which the computer program according to Claim 12 is stored.

FIG.1.

FIG.2.

Info
cnx — 21

Select
cn — 22

t x
pa. — 23

# FIG.3.

36 — Applications

UDP or TCP

IP

WSMP — 35

34 — LLC

33 — Muti-Channel and/or
Multi-Interface Operation

32 — MAC

31 — PHY

# FIG.4.

| 36 | Authentication Transport Protocol |
| 35 | WSMP |
| 34 | LLC |
| 33 | Multi-Channel and/or Multi-Interface Operation |
| 32 | MAC |
| 31 | PHY |

| 36 | Authentication Transport Protocol |
| 34 | LLC |
| 33 | Muti-Channel and/or Multi-Interface Operation |
| 32 | MAC |
| 31 | PHY |

## FIG.5.

36 — Authentication Transport Protocol

Get Service Channels States()

61 — Return Service Channels States () — 62

33 — Multi-Channel and/or Multi-Interface Operation

32 — MAC

## FIG.6.

FIG.7

Info cnx — 21

busy$_i$=Φ
length$_i$=Φ — 601

608 — Select

607 — >1

603 — >1

606 — Select 1 cnal

604 — Select prob

605 — E

22

FIG.8.

36

81 — obt

82 — Select

33

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007225044 A